# EUROPEAN PATENT SPECIFICATION

(11) **EP 0 426 051 B1**
(45) Date of publication and mention of the grant of the patent: **03.05.1995**
(21) Application number: 90120635.9
(22) Date of filing: 27.10.1990
(51) Int. Cl.: A47B 47/04, F16B 12/14, A47B 96/20

(54) **Built-up furniture unit**
Aufbau-Möbeleinheit
Unité de meuble assemblé

(30) Priority: 30.10.1989 JP 279972/89
(43) Date of publication of application: 08.05.1991
(73) Proprietor: KYORAKU CO. LTD., Kyoto-shi, Kyoto-fu (JP)
(72) Inventor: Suzuki, Hideo, Kita-ku, Tokyo (JP)
(74) Representative: Weiss, Christian, Dipl.-Ing.

(56) References cited:
- WO-A-87/06809
- CA-A- 1 196 370
- FR-A- 2 105 693
- GB-A- 1 223 261
- JP-U-62 200 541
- US-A- 4 277 198

## Description

### BACKGROUND OF THE INVENTION

### 1. Field of the Invention

This invention relates to a built-up furniture unit, and more particularly to built-up furniture units whose side panels are formed by housing panels which are formed into a hollow double-walled construction by blow molding a thermoplastic resin, such as wagons, portable or stationary type cabinets, racks, desks, chests and work tables and the like for home use, industrial use, office-work use, etc.

### 2. Description of the Prior Art:

Examples of the built-up furniture unit of the kind specified above include a container as disclosed in Japanese Utility Model Application Laid-open Publication NO. SHO 62-200541 and a built-up construction of a desk panel as disclosed in Japanese Utility Model Application Laid-Open Publication NO. SHO 64-21618, etc.

In any of the above-mentioned prior art examples, since the portions of the housing panels to be joined to each other are formed in such a construction as to be joined by fitting tongues formed on one of them into grooves formed on the other, when the housing panels are subjected to a loading, the joined portions are deformed, rubbing or chafing against each other, which results in offensive creak from the joined portions thus displeasing the user.

Moreover, there has been a problem in that the joined portions are inadequate in mechanical strength.

Light-weight panels for use in built-up furniture units which possess a relatively excellent rigidity can be obtained by blow molding a thermoplastic resin into a hollow double-walled construction, however, there is a problem in that they are not satisfactory as structural members. Therefore, even in housing panels formed by a material which is excellent in mechanical strength, it is very difficult to completely eliminate "deformation due to deflection" and "tottering from side to side" of them when subjected to loading. In the jointed construction of the above-mentioned prior art built-up furniture units, it is envisaged that when the above-mentioned deformation occurs the joined portions of the housing panels will rub against each other while they are kept in pressure contact, thus creating the above-mentioned creak.

From CA-A-1 196 370 a built-up furniture unit is known which uses coupling members which are mounted on the inside surface of the housing panels. Furthermore, the coupling members mount the panels such, that the inner perimetrical edges of adjacent panels are spaced-apart by a distance, and the outer perimetrical edges of adjacent panels are spaced-apart a greater distance, so that the end face of each panel lies in the plane of the inner planar face of the right angularly related, adjacent panel.

WO-87/06809 shows hollow blow molded panels for either doors or drawer fronts for storage cabinets and the like having a recessed handle.

### SUMMARY OF THE INVENTION

The present invention has been made in view of the above-mentioned circumstances in the prior art, and has for its object to provide a built-up furniture unit wherein even when it is subjected to a loading, thus causing deformation of housing panels constituting the furniture unit, the relative displacement in the joined portions thereof is reduced so that the generation of creak in these portions can be prevented and also the mechanical strength of the joined portions can be improved.

To achieve the above-mentioned object, according to a first aspect of the present invention, there is provided a built-up furniture unit formed by joining a plurality of housing panels to one another, at least one of each joined pair of the housing panels being formed into a hollow double-walled construction by blow molding a thermoplastic resin, the unit comprising; plural pairs of interposing members each having at least one screw-threaded hole formed therethrough and each pair of interposing members being mounted at predetermined places, respectively corresponding to each other, of each pair of housing panels to be joined to each other, and a plurality of connector members each being fixedly secured between each pair of interposing members by means of at least two bolts to thereby join each pair of housing members to each other, wherein the housing panels are joined to one another by fixedly securing these connector members to the plural pairs of interposing members through the bolts, respectively.

To achieve the above-mentioned object, according to a second aspect of the present invention, there is provided a built-up furniture unit as set forth in the first aspect, characterized by a plurality of reinforcing members each having at least one screw-threaded hole formed at a predetermined place thereof and being mounted on one housing panel of each pair of housing panels; a plurality of bolts each being passed through at least one hole formed at a predetermined place of the other housing panel and being threadably engaged with the screw-threaded holes of each of the reinforcing members.

Further, according to a third aspect of the present invention, there is provided a built-up furniture unit as set forth in any one of the first and second aspects, characterized in that a slight clearance is kept between mutually adjacent opposed surfaces of each pair of housing panels to be interconnected excluding the places where the reinforcing members and/or said connector members are mounted.

Still further, according to a fourth aspect of the present invention, there is provided a built-up furniture unit as set forth in any one of the first and second aspects, characterized in that the plurality of housing panels comprises a piece of bottom panel, side panels erected on the left and right sides of the bottom panel, a piece of rear panel and a piece of top panel resting on and fixedly secured to these side panels, the bottom panel having a higher rigidity than that of each side panel consisting of housing panels made by blow molding.

According to the present invention having the above-mentioned aspects, even if the built-up furniture unit is subjected to a loading, thus causing deformation of the housing panels forming the furniture unit, the relative displacement between the joined portions of the housing panels is reduced so that creaking of these portions can be prevented.

Further, according to the third aspect, since the housing panels to be interconnected are joined to one another with a slight clearance kept between the joined surfaces thereof, even if deformation of the housing panels occurs, there is no possibility of the housing panels contacting directly with each other while they are kept in pressure contact, so that there is no possibility of the joined portions thereof being subjected to excessive loading, and also creaking of the joined portions can be prevented.

Still further, according to the fourth aspect, the housing panel which forms the bottom panel and is subjected to a highest loading due to the erection of the left-hand and right-hand side panels and the rear panel thereon can be prevented from being subjected to excessive deformation so that a rigidity necessary for the built-up furniture unit can be maintained.

The above-mentioned and other objects, aspects and advantages of the present invention will become apparent to those skilled in the art by making reference to the following description and the accompanying drawings in which preferred embodiments incorporating the principles of the present invention are shown by way of example only.

### BRIEF DESCRIPTION OF THE DRAWINGS

Figs. 1A and 2A are exploded perspective views showing first and second embodiments, respectively, of the present invention;
Figs. 1B and 2B are perspective views showing lower surfaces of top panels used in the embodiments as shown in Figs. 1A and 2A, respectively;
Fig. 3 is a perspective view showing the assembled state of any one of the first and second embodiments shown in Figs. 1A and 2A, respectively;
Figs. 4, 5, 7 and 8 are sectional views showing assembled conditions, which are taken along lines IV-IV, V-V, VII-VII and VIII-VIII, respectively, in Fig. 1A;
Fig. 6 is a sectional view showing the assembled condition, which is taken along line VI-VI in Fig. 2A.

### DETAILED DESCRIPTION OF PREFERRED EMBODIMENTS

The present invention will now be described in detail below by way of several embodiments thereof with reference to the accompanying drawings.

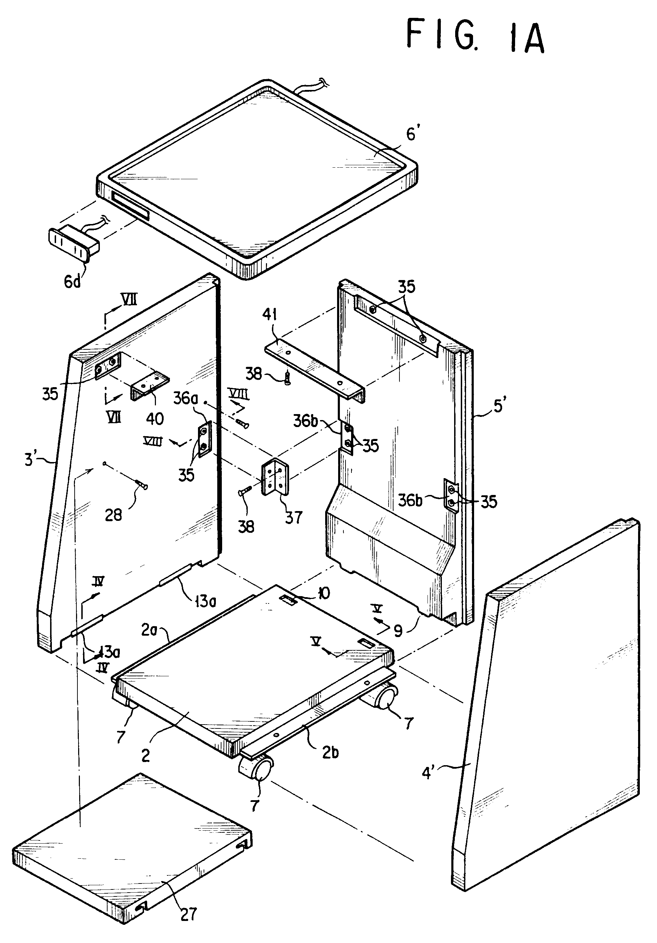

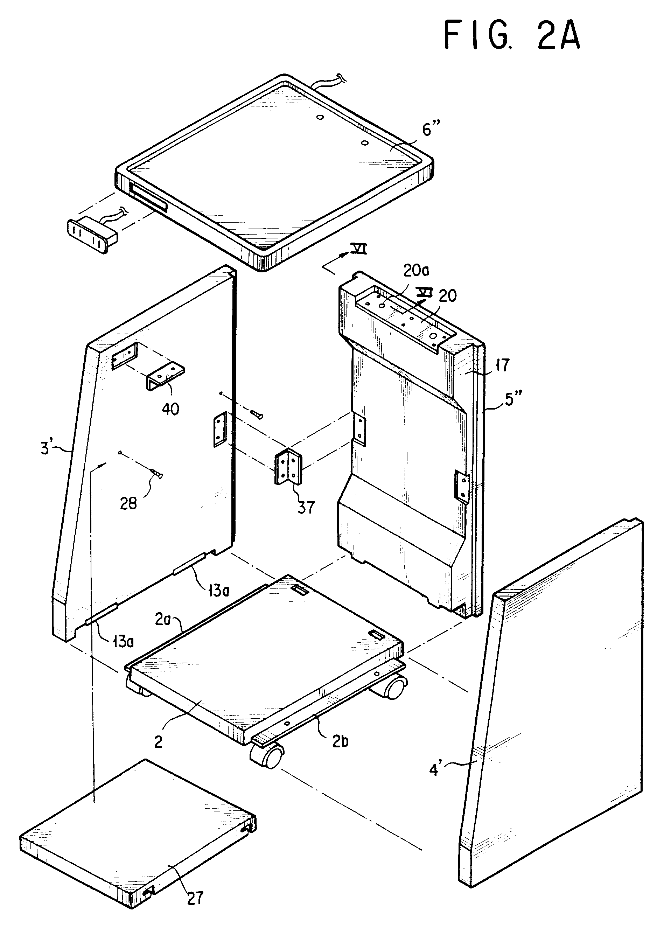

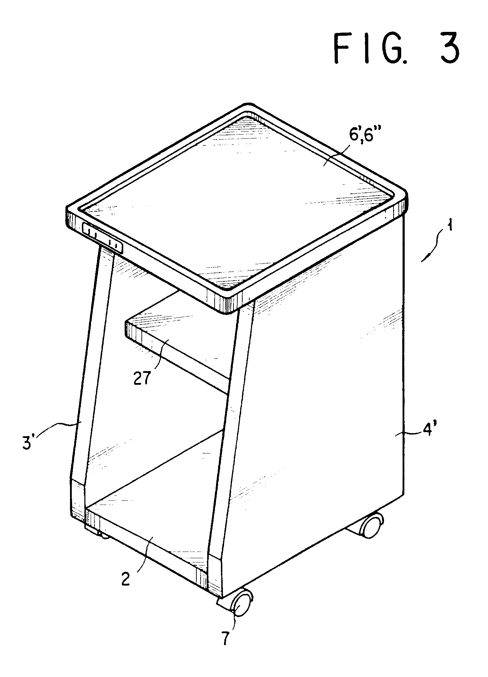

Fig. 3 shows a wagon 1 adapted for use as a household dresser which is an embodiment of the built-up furniture unit according to the present invention. This wagon 1 is built up in different joining configurations as shown in Figs. 1A and 2A, respectively.

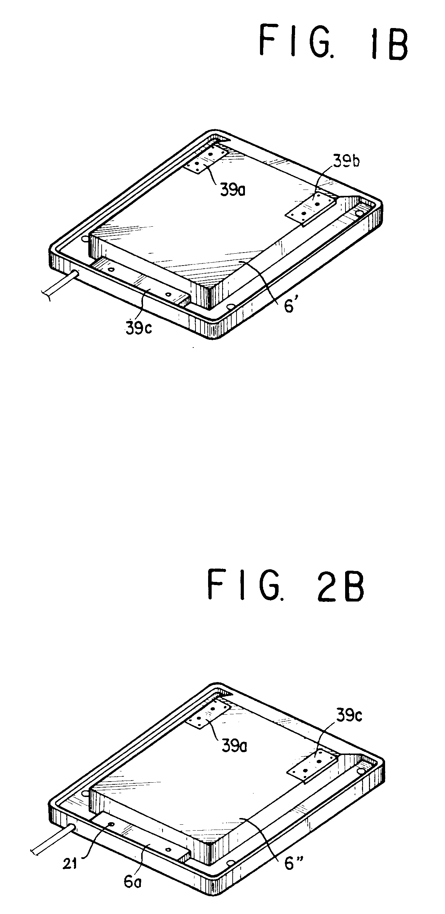

In Fig. 1 showing a first embodiment of the present invention, reference numeral 2 denotes a bottom panel, 3', 4' left-hand and right-hand side panels adapted to be erected on and fixedly secured to the left and right edges, respectively of the bottom panel 2, 5' a rear panel adapted to be erected on and fixedly secured to the rear edge of the bottom panel 2 and joined to the left-hand and right-hand panels 3' and 4', respectively, at right angles thereto, and 6' a top panel adapted to be joined to the upper ends of the left-hand and right-hand side panels 3' and 4', and the rear panel 5', which meet at right angles with one another.

In the above-mentioned panels 2 and 3' to 6' which are housing panels for constructing the wagon 1, the bottom panel 2 is of a sheet metal construction, and each of bearer plates 2a and 2b fixedly secured to both the left and right edges of the bottom panel 2 has casters 7 mounted rotatably on the underside thereof.

Further, each of the panels 3' to 6' excluding the above-mentioned bottom panel 2 is formed into a double-walled construction by blow molding a thermoplastic resin which is excellent in mechanical strength such as, for example, modified polyphenylene oxide resin, etc.

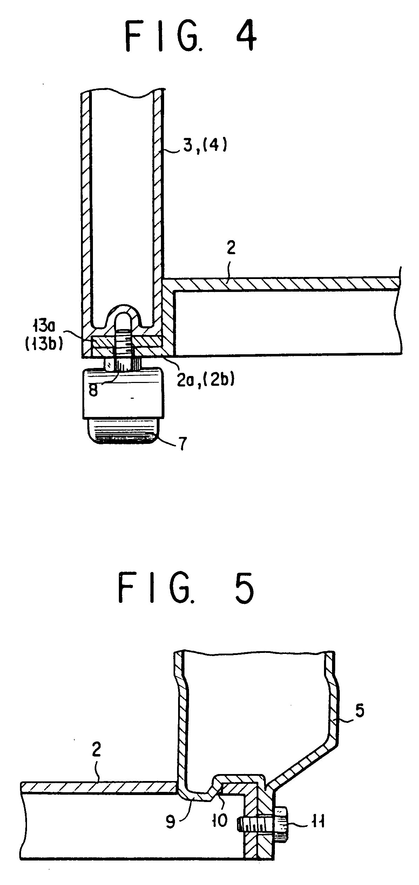

The left-hand side panel 3' and the right-hand side panel 4' are joined to the bottom panel 2 as shown in Fig. 4. Reinforcing members 13a and 13b mounted on the lower ends of both the side panels 3', 4' are rested on the bearer plates 2a, 2b provided on the left and right edges of the bottom panel 2, and joined to the bearer plates 2a, 2b, respectively, by screwing bolts 8 thereinto from the underside thereof. Further, the rear plate 5' is joined to the bottom panel 2 as shown in Fig. 5. The lower end portion of the rear panel 5' is rested on and along one side of the bottom panel 2 so as to fit projections 9 formed on the lower end of the rear panel 5' into holes 10 formed through the bottom panel 2, and then the rear panel 5' is joined to the bottom panel 2 by screwing bolts 11 through the lower parts of the two.

Reference numeral 27 denotes a shelf adapted to be engaged with and supported by a pin 28 fixedly secured to the inside of the left-hand and right-hand side panels 3' and 4'.

Further, the top panel 6' has a power supply plug socket 6d attached thereto.

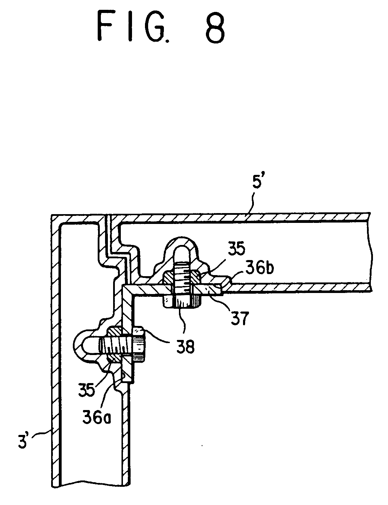

The above-mentioned left-hand and right-hand side panels 3' and 4' and a rear panel 5' have connector member mounting seat portions 36a, 36b, respectively, formed at the opposed inner corner portions thereof. Each of the connector member mounting seat portions is provided with mounting nuts 35 fixedly secured thereto so as to serve as interposing members. An L-shaped connector member 37 is fixedly secured by means of bolts 38 to each pair of opposed connector member mounting seat portions 36a and 36b. (Refer to Fig. 8).

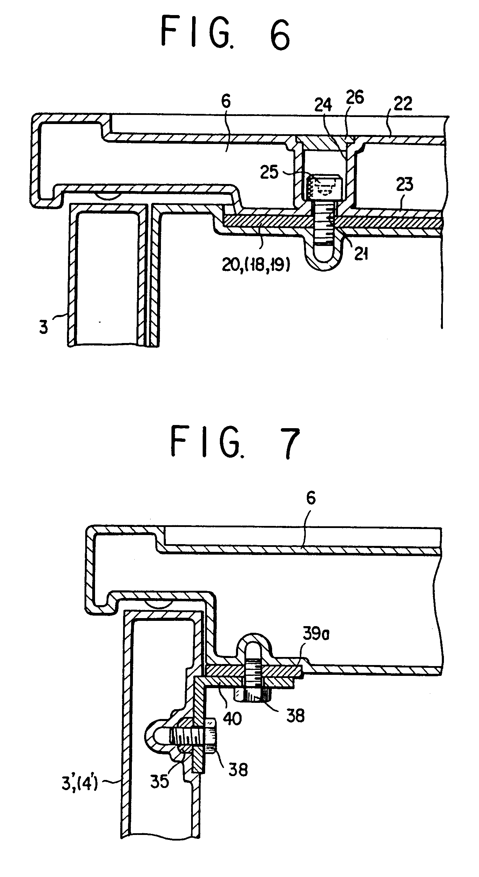

The top panel 6' has connector member mounting seats which are formed on the corner portions of the lower surface thereof opposite to the upper ends of the left-hand and right-hand side panels 3' and 4' and the rear panel 5', respectively, and to which screw mounting plates 39a, 39b and 39c serving as interposing members are fixedly secured. Further, L-shaped connector members 40 and 41 are fixedly secured by means of bolts 38 to the mutually opposed mounting seats of the top panel 6', the side panels 3' and 4', and the rear panel 5', respectively. (Refer to Fig. 7)

In the above-mentioned configuration, the left-hand side panel 3' and the right-hand side panel 4' are joined to the rear panel 5' by means of the L-shaped connector members 37, and these panels 3', 4' and 5' are joined to the top panel 6' by means of the connector members 37, 40 and 41.

Figs. 2A and 2B show a second embodiment of the present invention wherein the left-hand side panel 3' and the right-hand side panel 4' are joined to a rear panel 5'' by means of L-shaped connector members 37, 37, as in the case of the first embodiment. Further, the left-hand side panel 3' and the right-hand side panel 4' are connected to a top panel 6'' by means of connector members 40 as in the case of the first embodiment.

The rear panel 5'' has a bracket 17 for top panel mounting purposes, formed on the inside of its upper end. The bracket 17 has a mounting seat portion in the form of a recession formed on its upper surface. Mounted on the mounting seat portion is a plate-shaped, metallic reinforcing member 20 having a screw-threaded hole (or holes) 20a formed therethrough, with which a bolt (or bolts) is (are) threadably engaged.

The top panel 6'' has a mounting/fitting portion 6a formed integrally on the underside thereof and adapted to be fitted in the mounting seat portion of the rear panel 5'' in a condition wherein the top panel 6'' is rested on the upper ends of the side panels 3' and 4' and the rear panel 5''. The mounting/fitting portion 6a has a hole (or holes) 21 formed therethrough, through which a bolt (or bolts) is (are) passed.

Further, the hole 21 made on the underside of the top panel 6'' for passing a bolt therethrough is formed, as shown in Fig. 6, for example, in a recess 24 which is formed by depressing an outer wall 22 towards an inner wall 23 in such a way as to force the former wall to be kept into pressure contact with the latter wall. The recesse 24 is closed by means of a cover member 26 after a bolt has been screwed therein (after the assembly).

The rear panel 5'' is joined to the top panel 6'' by fitting the mounting/fitting portion 6a of the top panel 6'' into the mounting seat portion of the bracket 17 for top panel mounting purposes formed integrally on the rear panel 5'', and then threadably engaging the bolt (or bolts) 25, which is (are) passed through the hole (or holes) for the passage of bolt (or bolts), formed in the mounting/fitting portion 6a, with the screw-threaded holes formed through the reinforcing member 20 fixedly secured to the mounting seat portion.

In the built-up constructions of the above-mentioned embodiments, the arrangement is made such that a slight clearance is kept between the mutually adjacement, opposed surfaces of the left-hand side panel 3', the right-hand side panel 4', the rear panels 5', 5'' and the top panels 6', 6'', respectively, excluding the places where the reinforcing members and the connecting members are mounted.

The plurality of housing panels which are formed into a hollow double-walled construction by blow molding a thermoplastic resin in the first and the second embodiments are indicative of at least two panels out of the housing panels such as the top panel, the left-hand side panel, the right-hand side panel, the rear panel, and the bottom panel. Further, the interposing members as set forth in the first embodiment, and the reinforcing members as set forth in the second embodiment are indicative of plate members, nuts (including self-tapping nuts) or tubular members. In order to attach these members to the housing panels, it is possible to embed these members partially in the material for forming housing panels when blow molding of the latter is made, or fixedly secure by means of bolts, rivets, etc., bond by fusion or adhesively bond them after the completion of blow molding of the housing panels. Further, the connector members as set forth in the first embodiment are indicative of L-shaped plates or square pipes. Still further, the above-mentioned embodiment, the bottom panel may be made of a glass fibre reinforced synthetic resin, a low foaming synthetic resin or wood, which has a higher rigidity than that of any of the side panels and the rear panel consisting of housing panels made by blow molding.

The housing panels having a hollow double-walled construction and used for forming the built-up furniture unit of the present invention are manufactured by extruding a blow moldable thermoplastic resin such as modified polyphenylene oxide resin, ABS resin, polycarbonate resin, polyamide resin or polypropylene resin, etc in a plasticized condition in the form of a pipe or sheet and subjecting the extruded pipe or sheet to blow molding by expanding it within a blow mold.

Further, the front and rear walls of the housing panels may be formed with reinforcing ribs, and the hollow portions thereof may be filled with a foamed material.

In the built-up furniture unit of the present invention, it becomes easily possible to change or modify its form. For example, in case it is used as a cabinet within which communication equipments or electronic equipments are built-in, it is preferable for the bottom panel to have a higher rigidity than that of any of the side panels and the rear panel consisting of housing panels made of a thermoplastic resin by blow molding. On the other hand, in case it is used as a cabinet within which light weight goods or equipment are built-in or contained, the housing panel made of a thermoplastic resin by blow molding can be used as the bottom panel.

In addition, the built-up furniture unit of the present invention is not limited to such construction parts as a bottom panel, left- and right-hand side panels, a rear panel and a top panel, but can be constructed into a built-up furniture unit even when one or some construction parts are omitted. For example, in case it is used as a wagon, the rear panel portion may be formed by L-shaped extensions of left- and right-hand side panels. In this case, the rear panel may be omitted. Further, if it is used as a desk, only the bottom panel or both the bottom and the rear panels can be omitted.

## Claims

1. A built-up furniture unit (1) formed by joining a plurality of housing panels (2, 3', 4', 5', 6') to one another, at least one of each joined pair of the housing panels being formed into a hollow double-walled construction by blow molding a thermoplastic resin, characterized by
plural pairs of interposing members (35, 35; 35, 39a; 35, 39b; 35, 39c) each having at least one screw-threaded hole formed therethrough and each pair of interposing members (35, 35; 35, 39a; 35, 39b; 35, 39c) being mounted at predetermined places, respectively corresponding to each other, of each pair of housing panels to be joined to each other; and
a plurality of connector members (37, 40, 41) each being fixedly secured between said each pair of interposing members (35, 35; 35, 39a; 35, 39b; 35, 39c) by means of at least two bolts (38) to thereby join each pair of housing panels to each other; and in
that said housing panels (2, 3', 4', 5', 6') are joined to one another by fixedly securing these connector members (37, 40, 41) to said plural pairs of interposing members (35) through said bolts (38), respectively.

2. A built-up furniture unit according to claim 1, characterized by
a plurality of reinforcing members (13a; 13b; 20) each having at least one screw-threaded hole formed at a predetermined place thereof and being mounted on one housing panel (3'; 4'; 5'') of each pair of housing panels (2, 3'; 2, 4'; 5'', 6''); and
a plurality of bolts (8; 25) each being passed through at least one hole formed at a predetermined place of the other housing panel (2; 6'') and being threadably engaged with the screw-threaded hole of each of said reinforcing members (13a; 13b; 20).

3. A built-up furniture unit according to any one of claims 1 to 2, characterized in that a slight clearance is kept between mutually adjacent opposed surfaces of said each pair of housing panels to be interconnected excluding the places where said reinforcing members (13a, 13b, 20) and/or said connector members (37,40, 41) are mounted.

4. A built-up furniture unit according to any one of claims 1 to 2, characterized in that said plurality of housing panels comprises a piece of bottom panel (2), side panels (3', 4') erected on the left and right sides (2a, 2b) of the bottom panel (2), a piece of rear panel (5', 5'') and a piece of top panel (6', 6'') resting on and fixedly secured to the side panels (3', 4') and the rear panel (5', 5''), said bottom panel (2) having a higher rigidity than that of any of the side panels (3', 4') and the rear panel (5', 5'') consisting of housing panels made by blow molding.

5. A built-up furniture unit according to claim 4, characterized in that said bottom panel (2) is made of metal plate.

6. A built-up furniture unit according to claim 4, characterized in that said bottom panel (2) is made of a glass fiber reinforced synthetic resin.

## Patentansprüche

1. Eine Aufbau-Möbeleinheit (1), hergestellt durch Verbinden von mehreren Wohnraumplatten (2,3,'4',5',6') miteinander, wobei wenigstens eine der paarweise zusammengefügten Platten als hohle, doppelwandige Konstruktion durch Spritzguß aus einem thermoplastischen Kunststoff hergestellt wurde, gekennzeichnet durch
mehrere Paare von Zwischenstücken (35,35; 35,39a; 35,39b; 35,39c), von denen jedes mindestens ein hineingeformtes Schraubeloch enthält und jedes der Zwischensrücke (35,35; 35,39a; 35,39b; 35,39c) an vorbestimmten Plätzen montiert ist, so daß sich an jedes Paar Wohnraumplatten, das zusammengefügt werden soll, einander entspricht; und
einer Vielzahl von Verbindungsstücken (37,40,41), die mit Hilfe von mindestens zwei Bolzen sicher die Paare der Zwischenstücke (35,35; 35,39a; 35,39b; 35,39c) und damit wiederum die Wohnraumplatten sicher miteinander verbinden; und
daß die genannten Wohnraumplatten (2,3',4',5',6') durch sicheres Fixieren dieser Paare von Zwischenstücken über jedes Paar der Verbindungsteile mit den genannten Bolzen verbunden werden.

2. Eine Aufbau-Möbeleinheit nach Anspruch 1, gekennzeichnet durch
eine Vielzahl von Verstärkungselementen (13a,13b,20), die jeweils mindestens ein an einem vorbestimmten Platz vorhandenes Schraubenloch besitzen und auf je einer Wohnraumplatte (3',4',5'') der Wohnraumplattenpaare (2,3';2,4';5'',6'') angebracht sind; und
einer Vielzahl von Bolzen (8,25), die in mindestens ein Loch passen, das an einem vorbestimmten Platz der anderen Wohnraumplatte (2,6'') vorhanden ist und durch Verschrauben mit dem Schraubenloch in jedem der Verstärkungselemente (13a,13b,20) verbunden werden.

3. Eine Aufbau-Möbeleinheit nach Anspruch 1 oder 2, gekennzeichnet durch eine schmale Lücke zwischen den wechselseitig einander gegenüberliegenden Oberflächen der genannten Paare der Wohnraumplatten, die ausschließlich an den Stellen verbunden sind, an denen sich die Verstärkungsstücke (13a,13b,20) und/oder die Verbindungsstücke (37,40,41) befinden.

4. Eine Aufbau-Möbeleinheit nach Anspruch 1 oder 2, dadurch gekennzeichnet, daß die genannte Vielzahl der Wohnraumplatten aus einer Bodenplatte (2), Seitenplatten (3',4'), die auf der rechten und der linken Seite (2a,2b) der Bodenplatte (2) errichtet werden, einer Rückwand (5',5'') und einer Deckplatte (6',6''), die auf den Seitenteilen (3',4') und der Rückwand (5',5'') ruht und dort sicher fixiert ist, besteht, wobei die Bodenplatte (2) eine höhere Festigkeit besitzt als jede der Seiten- (3',4') oder Rückwände (5',5''), bestehend aus Wohnraumplatten, die durch Spritzgießen hergestellt werden.

5. Eine Aufbau-Möbeleinheit nach Anspruch 4, dadurch gekennzeichnet, daß die genannte Bodenplatte (2) aus Metall besteht.

6. Eine Aufbau-Möbeleinheit nach Anspruch 4, dadurch gekennzeichnet, daß die genannte Bodenplatte (2) aus Glasfiber-verstärktem Kunstharz besteht.

## Revendications

1. Meuble assemblé (1) formé en réunissant une pluralité de panneaux formant corps (2, 3', 4', 5', 6') les uns avec les autres, au moins un panneau de chaque paire assemblée de panneaux formant corps étant formé pour constituer une construction à doubles parois creuse en moulant par soufflage une résine thermoplastique, caractérisé par
plusieurs paires d'éléments d'interposition (35, 35 ; 35, 39a ; 35, 39b ; 35, 39c) présentant chacun au moins un perçage fileté formé à travers lui et chaque paire d'éléments d'interposition (35, 35 ; 35, 39a ; 35, 39b ; 35, 39c) étant montée en des points prédéterminés, correspondant respectivement les uns aux autres, de chaque paire de panneaux formant corps destinés à être assemblés ; et
une pluralité d'éléments de liaison (37, 40, 41), chacun monté de façon fixe entre chaque paire d'éléments d'interposition (35, 35 ; 35, 39a ; 35, 39b ; 35, 39c), au moyen d'au moins deux boulons (38), afin de réunir ainsi chaque paire de panneaux formant corps les unes aux autres ; et en ce que
les panneaux formant corps (2, 3', 4', 5', 6') sont assemblés les uns aux autres en montant fixement ces éléments de liaison (37, 40, 41) sur les différentes paires d'éléments d'interposition (35) au moyen des boulons (38), respectivement.

2. Meuble assemblé selon la revendication 1, caractérisé par une pluralité d'éléments de renfort (13a ; 13b ; 20) présentant chacun au moins un perçage fileté formé en un point prédéterminé de celui-ci et étant monté sur un panneau formant corps (3' ; 4' ; 5'') de chaque paire de panneaux formant corps (2, 3' ; 2, 4' ; 5'', 6''); et une pluralité de boulons (8 ; 25) introduits, chacun, à travers au moins un perçage ménagé en un point prédéterminé de l'autre panneau formant corps (2 ; 6'') et coopérant par vissage avec le perçage fileté de chaque élement de renfort (13a ; 13b ; 20).

3. Meuble assemblé selon l'une quelconque des revendications 1 à 2, caractérisé en ce qu'un léger espacement est conservé entre des surfaces opposées, adjacentes les unes aux autres, de chaque paire de panneaux formant corps, destinés à être reliés, à l'exception des endroits où les éléments de renfort (13a, 13b, 20) et/ou les éléments de liaison (37, 40, 41) sont montés.

4. Meuble assemblé selon l'une quelconque des revendications 1 à 2, caractérisé en ce que la pluralité de panneaux formant corps comprend un panneau de fond (2), des panneaux latéraux (3', 4') montés verticaux sur les côtés gauche et droit (2a, 2b) du panneau de fond (2), un panneau arrière (5', 5'') et un panneau de dessus (6', 6'') reposant sur et relié de façon fixe aux panneaux latéraux (3', 4') et au panneau arrière (5', 5''), le panneau de fond (2) présentant une rigidité supérieure à la rigidité de l'un des panneaux latéraux (3', 4') et du panneau arrière (5', 5''), constitués de panneaux formant corps fabriqués par moulage par soufflage.

5. Meuble assemblé selon la revendication 4, caractérisé en ce que le panneau de fond (2) est constitué d'une plaque métallique.

6. Meuble assemblé selon la revendication 4, caractérisé en ce que le panneau de fond (2) est constitué en résine synthétique renforcée par des fibres de verre.
